# EUROPEAN PATENT APPLICATION

(11) **EP 1 683 703 A1**
(43) Date of publication of application: **26.07.2006**
(21) Application number: 06001216.8
(22) Date of filing: 20.01.2006
(51) Int. Cl.: B62D 1/20

(54) **Steering apparatus with elastic coupling**

(30) Priority: 24.01.2005 JP 2005016070
(71) Applicant: NSK LTD., Shinagawa-ku, Tokyo 141-8560 (JP)
(72) Inventor: Fuchigami, Shinichi, Shinagawa-ku Tokyo 141-8560 (JP)
(74) Representative: HOFFMANN EITLE

(57) **Abstract**

When there travels a vehicle equipped with a steering apparatus with a heavy constant velocity universal joint (4), e.g. double Cardan joint or Rzeppa joint, vibrations of the wheels and the vehicle body cause the joint to vibrate. A vibratory moment applied to the pinion shaft (5) caused by the vibration provokes undesirable engagement of the pinion (54) and the steering rack (61). A steering apparatus of the present invention is provided with an elastic coupling (7) between the joint and the pinion so as to prevent the vibration from being transferred and absorb the vibration.

## Description

### FIELD OF THE INVENTION

The present invention relates to a steering apparatus. More particularly, it relates to a steering apparatus in which vibrations and bending moments applied to a pinion are reduced, the pinion being attached to an extension shaft to convey rotation of a steering wheel to a rack of a steering gear.

### BACKGROUND OF THE INVENTION

A steering apparatus having such an extension shaft is disclosed inUS 6, 742, 621. In the steering apparatus disclosed in the patent document, to convey rotation of a steering wheel to an extension shaft which is not linearly aligned with the steering wheel, an intermediate shaft is connected to a lower end of a steering shaft which is connected to the steering wheel, and the extension shaft is connected to a lower end of the intermediate shaft via a universal joint.

When vibrations of wheels and a body of a traveling vehicle are applied to the steering apparatus, the universal joint at an upper end of the extension shaft vibrates. The vibrations of the universal joint then cause a pinion shaft at a lower end of the extension shaft to be subjected to large bending moments and vibrations. Hence, there have been cases in which not only steering stability of the steering wheel is degraded but the pinion shaft is subjected to a heavy load. Particularly, in cases where the steering apparatus uses a large, heavy double Cardan constant velocity universal joint, the pinion shaft is subjected to large bending moments often creating a big problem.

### SUMMARY OF THE INVENTION

An object of the present invention is to provide a steering apparatus in which vibrations and bending moments attributable to vibrations of wheels and a body of a traveling vehicle and applied to a pinion shaft and a pinion provided at a lower end of an extension shaft are reduced so as to improve steering stability and prevent the pinion shaft from being subjected to a heavy load.

The above object is achieved as follows. A first invention provides a steering apparatus which includes: a steering apparatus comprising; a steering column for rotatably supporting a steering shaft with which a steering wheel is to be fitted at the rear end; an intermediate shaft connected directly or indirectly to the front end of said steering shaft; a constant velocity universal joint connected to said intermediate shaft; an extension shaft consisting of an upper part connected to said constant velocity universal joint and a lower part having a pinion engaging with a steering rack; and an elastic coupling connecting said upper part to said lower part.

A second invention provides the steering apparatus according to the first invention, characterized in that said elastic coupling is provided at the substantial midpoint of said extension shaft.

A third invention provides the steering apparatus according to claim 1, characterized in that saidelastic coupling includes an elastic body for transmitting torque applied to upper part to said lower part when said torque is smaller than a predetermined value and a stopper pin for transmitting said torque when said torque is larger than said value.

A fourth invention provides the steering apparatus according to claim 1, characterized in that said intermediate shaft comprises an outer shaft and an inner shaft engaging with said outer shaft for transmitting torque but being allowed to slide axially in said outer shaft.

A fifth invention provides the steering apparatus according to claim 1, characterized in that said constant velocity universal joint is a double Cardan joint or a Rzeppa joint.

sixth invention provides the steering apparatus according to claims 1 to 5, further comprises a variable gear ratio steering device for changing the transmission ratio provided between said upper and lower parts.

In the steering apparatus of the present invention, an extension shaft includes an upper extension shaft and a lower extension shaft with a lower end of the upper extension shaft and an upper end of the lower extension shaft being connected by an elastic coupling, so that vibrations of a constant velocity universal joint are absorbed by the elastic coupling. Therefore, vibrations and bending moments applied to a pinion shaft and a pinion are reduced, and steering stability is improved. As a result, the pinion shaft and the pinion are prevented from being subjected to a heavy load.

### BRIEF DESCRIPTION OF THE DRAWINGS

Fig. 1 is an overall perspective view showing a steering apparatus according to the present invention in a state of being mounted on a vehicle.

Fig. 2 is apartlysectional side elevation view showing principal parts of a steering apparatus according to a first embodiment of the present invention.

Fig. 3 is an enlarged sectional view of a double Cardan constant velocity universal joint shown in Fig. 2, taken along line A-A thereof.

Fig. 4 is a sectional viewof the double Cardan constant velocity universal joint in a state reached when a steering shaft in the state shown in Fig. 3 is rotated by 90 degrees.

Fig. 5 is an enlarged sectional view of an elastic coupling shown in Fig. 2.

Fig. 6 is a partly sectional side elevationviewshowing principal parts of a steering apparatus according to a second embodiment of the present invention.

Fig. 7 is an exploded perspective view of an elastic coupling shown in Fig. 6.

Fig. 8 is apartly sectional side elevationviewshowing principal parts of a steering apparatus according to a third embodiment of the present invention.

Fig. 9 is a partly sectional side elevationview showing principal parts of a steering apparatus according to a fourth embodiment of the present invention.

Fig. 10 is a cross-sectional view of a constant velocity universal joint shown in Fig. 9.

### DETAILED DESCRIPTION OF THE INVENTION

### First Embodiment

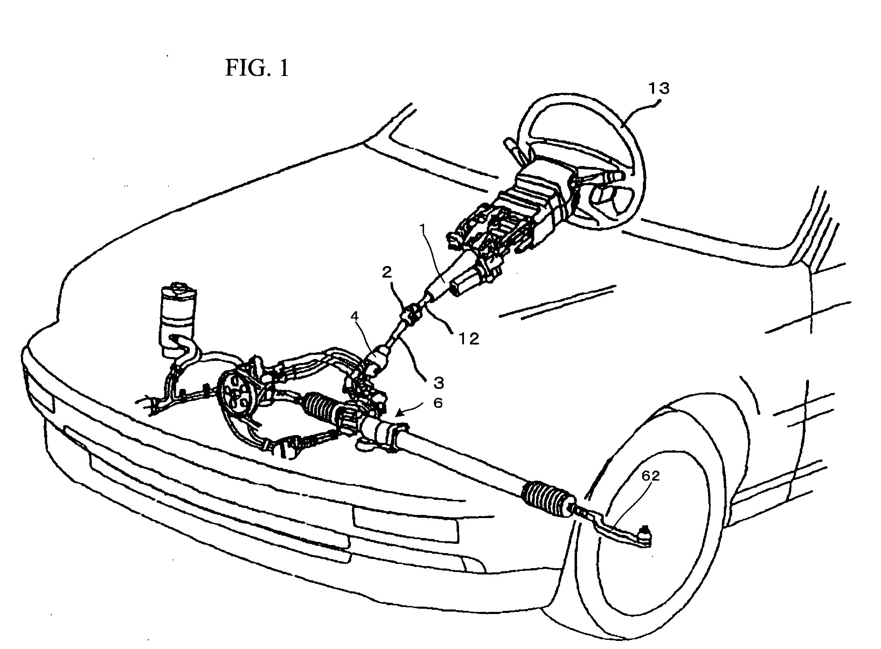

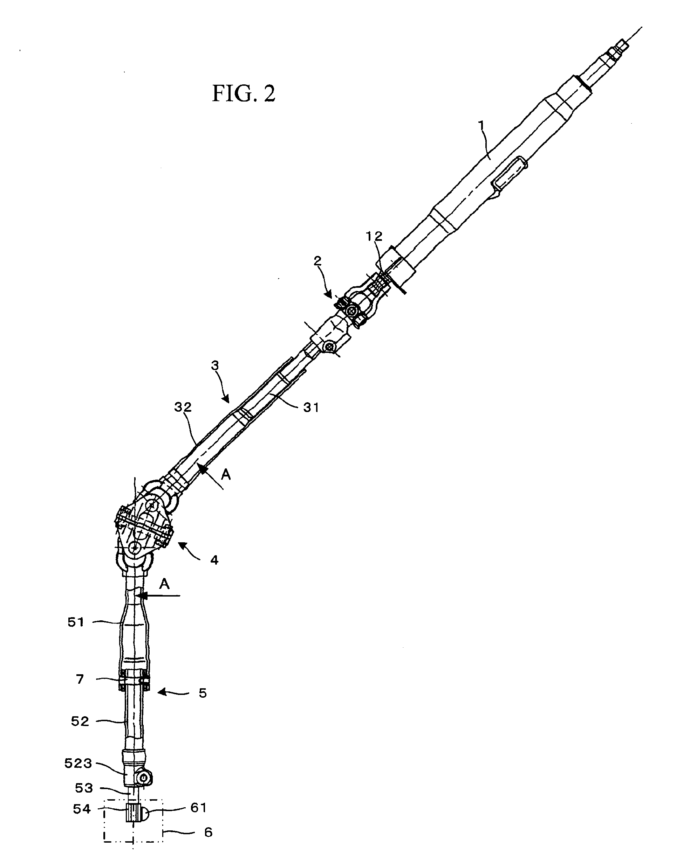

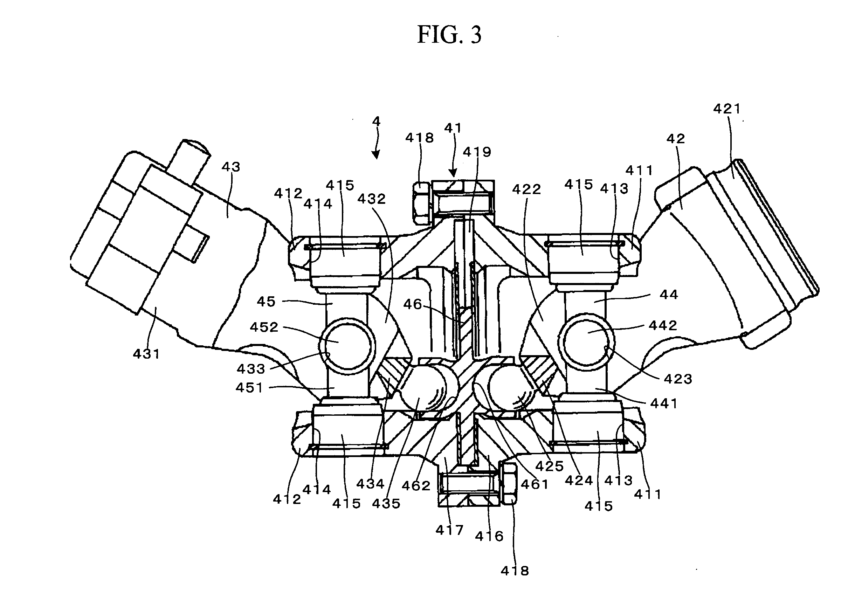

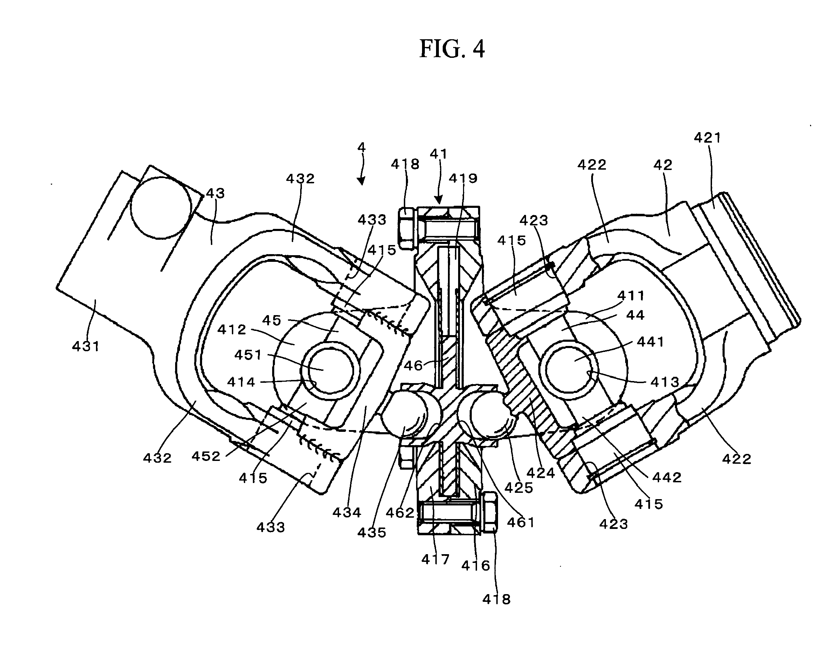

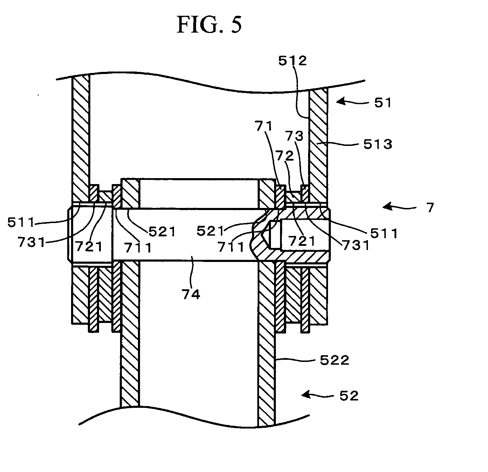

A first embodiment of the present invention will be described in the following with reference to the accompanying drawings. Fig. 1 is an overall perspective view showing a steering apparatus according to the present invention in a state of being mounted on a vehicle. Fig. 2 is a partly sectional side elevation view showing principal parts of a steering apparatus according to the first embodiment of the present invention. Fig. 3 is an enlarged sectional view of a double Cardan constant velocity universal joint shown in Fig. 2, taken along line A--A thereof. Fig. 4 is a sectional view of the double Cardan constant velocity universal joint in a state reached when a steering shaft in the state shown in Fig. 3 is rotated by 90 degrees. Fig. 5 is an enlarged sectional view of an elastic coupling shown in Fig. 2.

As shown in Figs. 1 and 2, a cylindrical column 1 is fixed to a vehicle body and a steering shaft 12 is rotatably and axially supported by the column 1. A steering wheel 13 is connected to a right end (toward a rear of the vehicle body) of the steering shaft 12 and an intermediate shaft 3 is connected, via a Cardan joint 2, to a left end (toward a front of the vehicle body) of the steering shaft 12.

A double Cardan constant velocity universal joint 4 is connected to a left end of the intermediate shaft 3, and an extension shaft 5 is connected to the double Cardan constant velocity universal joint 4. Constant velocity universal joints are available in such types as Birfield, tripot, double offset, cross groove, double Cardan, and Rzeppa. The following description of the first embodiment is based on a case in which a double Cardan constant velocity universal joint is used.

A pinion 54 attached to a pinion shaft 53 which is connected to a lower end of the extension shaft 5 is engaged with a rack 61 of a steering gear 6. The extension shaft 5 includes an upper extension shaft 51, a lower extension shaft 52, and an elastic coupling 7, a lower end of the upper extension shaft 51 and an upper end of the lower extension shaft 52 being coupled by the elastic coupling 7. The elastic coupling 7 is provided at about an axial midpoint of the extension shaft 5. The pinion shaft 53 and the pinion 54 are not integral with the extension shaft 5. They are fixedly clamped to a coupling 523 formed at a lower end of the lower extension shaft 52.

When a driver rotates the steering wheel 13, a torque generated is transmitted to the steering gear 6 via the steering shaft 12, the Cardan joint 2, the intermediate shaft 3, the double Cardan constant velocity universal joint 4, the extension shaft 5, and the pinion 54 attached to the pinion shaft 53. As a result, a tie rod 62 is moved via a rack and pinion mechanism to change the steering angle of wheels.

The intermediate shaft 3 includes an intermediate inner shaft 31 on which a male spline is formed and which is positioned toward the rear of the vehicle (upper side) and a hollow cylindrical intermediate outer shaft 32 on which a female spline is formed and which is positioned toward the front of the vehicle (lower side). The male spline of the intermediate inner shaft 31 is fit into the female spline of the intermediate outer shaft 32 such that the male spline is slidable along the female spline and such that a torque is transmissible from the male spline to the female spline. The end toward the rear of the vehicle of the intermediate inner shaft 31 is connected to the Cardan joint 2, and the end toward the front of the vehicle of the intermediate outer shaft 32 is connected to the double Cardan constant velocity universal joint 4.

Figs. 3 and 4 show details of the double Cardan constant velocity universal joint 4. The double Cardan constant velocity universal joint 4 includes an intermediate housing 41, first and second yokes 42 and 43, a first spider 44 connecting the first yoke 42 to the intermediate housing 41, and a second spider 45 connecting the second yoke 43 to the intermediate housing 41. It is a double Cardan constant velocity universal joint which absorbs, by means of a sliding centering disc 46, changes in positional relationship among the first and second yokes 42 and 43 and the intermediate housing 41.

The intermediate housing 41 is provided with a pair of first support arms 411 of a same phase at an axial end (right end as viewed in Figs. 3 and 4) and a pair of second support arms 412 of a same phase at the other axial end (left end as viewed in Figs. 3 and 4). The first support arms 411 are provided, in their edge portions, with a corresponding pair of mutually concentric first support holes 413. The second support arms 412 are provided, in their edge portions, with a corresponding pair of mutually concentric second support holes 414.

The first yoke 42 has a coupling cylinder portion 421 to which an end portion toward the front of the vehicle of the intermediate outer shaft 32 can be fixed. A pair of third support arms 422 is provided at an axial end (left end as viewed in Figs. 3 and 4) of the coupling cylinder portion 421. A pair of mutually concentric third support holes 423 is formed in end portions of the third support arms 422, respectively. Furthermore, a spherical first engaging protrusion 425 protruding in a direction away from the coupling cylinder portion 421 is formed at an intermediate portion of a first connecting part 424 which connects ends of the third support arms 422.

The second yoke 43 has a coupling cylinder portion 431 to which an upper end portion of the upper extension shaft 51 is fixable. A pair of fourth support arms 432 is provided at an axial end (right end as viewed in Figs. 3 and 4) of the coupling cylinder portion 431. A pair of mutually concentric fourth support holes 433 is formed in end portions of the fourth support arms 432, respectively. Furthermore, a spherical second engaging protrusion 435 protruding in a direction away from the coupling cylinder portion 431 is formed at an intermediate portion of a second connecting part 434 which connects ends of the fourth support arms 432.

First and second axial portions 441 and 442 make up, in a state of being perpendicular to each other, the first spider 44. Ends of the first axial portion 441 are rotatably supported at inside the first support holes 413, respectively, by radial needle bearings 415. Ends of the second axial portion 442 are rotatably supported at inside the third support holes 423, respectively, by radial needle bearings 415.

Third and fourth axial portions 451 and 452 make up, in a state of being perpendicular to each other, the second spider 45. Ends of the third axial portion 451 are rotatably supported at inside the second support holes 414, respectively, by radial needle bearings 415. Ends of the fourth axial portion 452 are rotatably supported at inside the fourth support holes 433, respectively, by radial needle bearings 415.

The intermediate housing 41 includes a first intermediate housing element 416 which includes the first support arms 411 and a second intermediate housing element 417 which includes the second support arms 412, the first and second intermediate housing elements 416 and 417 being coupled by plural bolts 418. A space for sliding 419 is provided between the first and second intermediate housing elements 416 and 417. The centering disc 46 is disposed in the space for sliding 419 such that it is displaceable in a plane perpendicular to a central axis of the intermediate housing 41.

First and second spherical engaging holes 461 and 462 are formed, in the same phase (concentrically), in axial end portions of the centering disc 46. The first and second engaging protrusions 425 and 435 are oscillatingly displaceably engaged with the first and second engaging holes 461and462, respectively. The engagement between the first and second engaging protrusions 425 and 435 and the first and second engaging holes 461 and 462 works to equalize the inclinations with respect to the intermediate housing 41 of the first and second yokes 42 and 43.

Therefore, when the first yoke 42 is rotated, a torque generated is transmitted to the second yoke 43 via the first spider 44, the intermediate housing 41, and the second spider 45. As the torque is transmitted, the positional relationship among the first and second yokes 42 and 43, and the intermediate housing 41 changes, but the change is absorbed as the centering disc 46 disposed in the space for sliding 419 provided in the housing 41 slides in a plane perpendicular to the central axis of the intermediate housing 41.

Next, the elastic coupling 7 will be described. The elastic coupling 7 includes, as shown in Fig. 5, an inner sleeve 71, an elastic body 72, an outer sleeve 73, and a stopper pin 74. The stopper pin 74 is a metallic pin which is fixed in an upper end portion of the lower extension shaft 52 in a diameter direction thereof. To allow the stopper pin 74 to be fixed as described above, a pair of through holes 521 facing each other in the diameter direction are formed in the upper end portion of the lower extension shaft 52.

The stopper pin 74 inserted through the through holes 521 is supported at its two intermediate portions. Both end portions of the stopper pin 74 have an outer diameter slightly larger than the inner diameter of the through holes 521. In a state where the stopper pin 74 is fixed as described above, each end portion of the stopper pin 74 protrudes outward from an outer periphery of the lower extension shaft 52 in the diameter direction thereof.

The elastic body 72 is made of an elastomeric material such as rubber and has a cylindrical shape. The metallic inner and outer sleeves 71 and 73 both having a cylindrical shape are concentrically disposed. An outer peripheral surface of the inner sleeve 71 and an inner peripheral surface of the elastic body 72 are bonded by heating or by using an adhesive. An inner peripheral surface of the outer sleeve 73 and an outer peripheral surface of the elastic body 72 are bonded in a similar way.

The inner sleeve 71 is fixedly fitted onto an outer periphery 522 of an upper end portion of the lower extension shaft 52. The outer sleeve 73 is fixedly fitted in an inner periphery 512 of the upper extension shaft 51.

There are one pair each of through holes 711, 721, 731 and 511 formed at one pair each of locations in the inner sleeve 71, the elastic body 72, the outer sleeve 73 and a part of cylindrical portion 513 of the upper extension shaft 51. The one pair each of through holes are aligned straight with the through holes 521 formed in the lower extension shaft 52, each pair of the through holes facing each other in a diameter direction of the lower extension shaft 52. Two end portions of the stopper pin 74 supported by the lower extension shaft 52 are inserted in the through holes 711, 721, 731, and 511 formed in the inner sleeve 71, the elastic body 72, the outer sleeve 73, and the upper extension shaft 51, respectively.

The through holes 711 formed in the inner sleeve 71 have an inner diameter approximately equal to the inner diameter of the through holes 521 formed in the lower extension shaft 52. The through holes 721 and 731 formed in the elastic body 72 and the outer sleeve 73, respectively, and the through holes 511 formed in the cylindrical portion 513 of the upper extension shaft 51 have an inner diameter larger than the inner diameter of the through holes 521 formed in the lower extension shaft 52.

Therefore, a gap is formed between an outer peripheral surface at each end portion of the stopper 74 and the inner peripheral surface of each of the corresponding one of the through holes 721 formed in the elastic body 72, the corresponding one of the through holes 731 formed in the outer sleeve 73, and the corresponding one of the through holes 511 formed in the upper extension shaft 51.

The elastic coupling 7 configured as described above operates as follows. When the torque applied from the steering wheel 13 to the steering shaft 12 is small, each end of the stopper pin 74 is positioned in a neutral position or in a position slightly shifted from the neutral position inside each of the through holes 511 formed in the upper extension shaft 51. In this state, there is a gap between the outer peripheral surface of each end portion of the stopper pin 74 and the inner peripheral surface of the corresponding one of the through holes 511, the gap extending completely around the outer peripheral surface of each end portion of the stopper pin 74 without allowing the outer peripheral surface of each end portion of the stopper pin 74 to come in contact with the inner peripheral surface of the corresponding one of the through holes 511.

In the above state, the small torque is transmitted from the lower extension shaft 52 to the pinion shaft 53, the pinion 54, the rack 61, and the steering gear 6 via the outer sleeve 73, the elastic body 72, and the inner sleeve 71.

When the vehicle travels, vibrations of the wheels and the vehicle body cause the heavy double Cardan constant velocity universal joint 4 to vibrate. However, with the elastic coupling 7 provided at about the axial midpoint of the extension shaft 5, vibrations of the double Cardan constant velocity universal joint 4 are absorbed by the elastic body 72 included in the elastic coupling 7.

Thus, the vibrations and bending moments applied to the pinion shaft 53 and the pinion 54 are reduced. As a result, steering stability is improved and the pinion shaft 53 is prevented from being subjected to a heavy load. As in the present embodiment, disposing the elastic coupling 7 at about the axial midpoint of the extension shaft 5 makes it possible to appropriately restrain the amplitude of vibrations and the magnitude of bending moments applied to the pinion shaft 53.

When the torque applied from the steering wheel 13 to the steering shaft 12 is large as in the case of giving a large steering angle to front wheels, the outer peripheral surface in each end portion of the stopper pin 74 and the inner peripheral surfaces of the corresponding through holes 511, 731, and 721 abut against each other. As a result, a large portion of the torque applied from the steering wheel 13 to the steering shaft 12 is transmitted to the lower extension shaft 52 via the stopper pin 74. In such a state, the torque transmitted via the elastic body 72 is limited, so that the elastic body 72 is not subjected to an excessive force.

Even though, in the first embodiment, the pinion shaft 53 and the pinion 54 are not integral with the extension shaft 5, and the pinion shaft 53 is connected to the lower end of the lower extension shaft 52, the pinion shaft 53 and the pinion 54 may be configured to be integral with the lower extension shaft 52. Also, in the first embodiment, the elastic coupling 7 is provided at about the axial midpoint of the extension shaft 5, but it may be disposed anywhere along the extension shaft 5, for example, at a point close to the pinion shaft 53 or at a point close to the double Cardan constant velocity universal joint 4.

### Second Embodiment

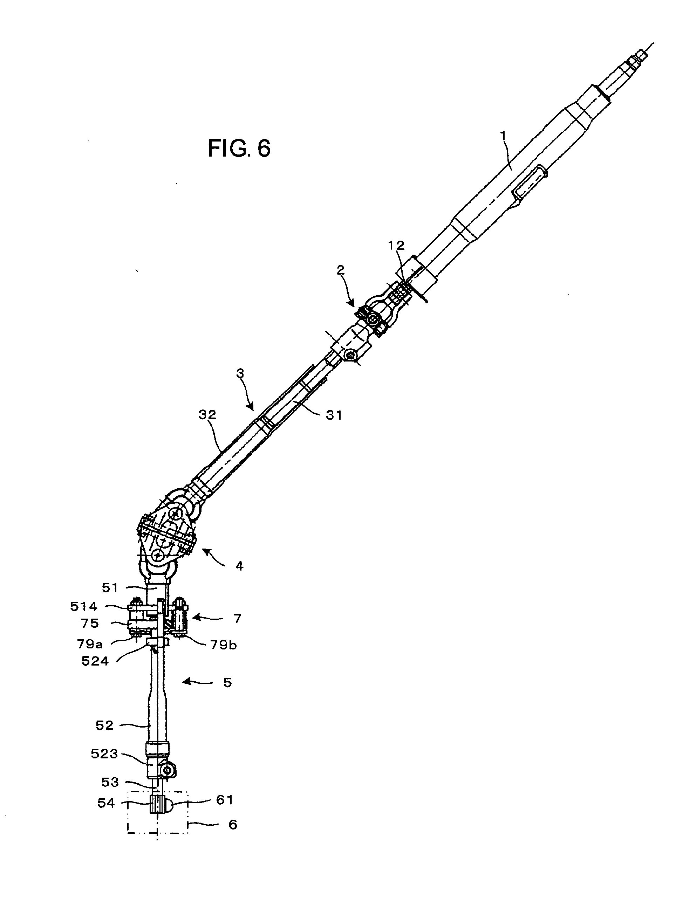

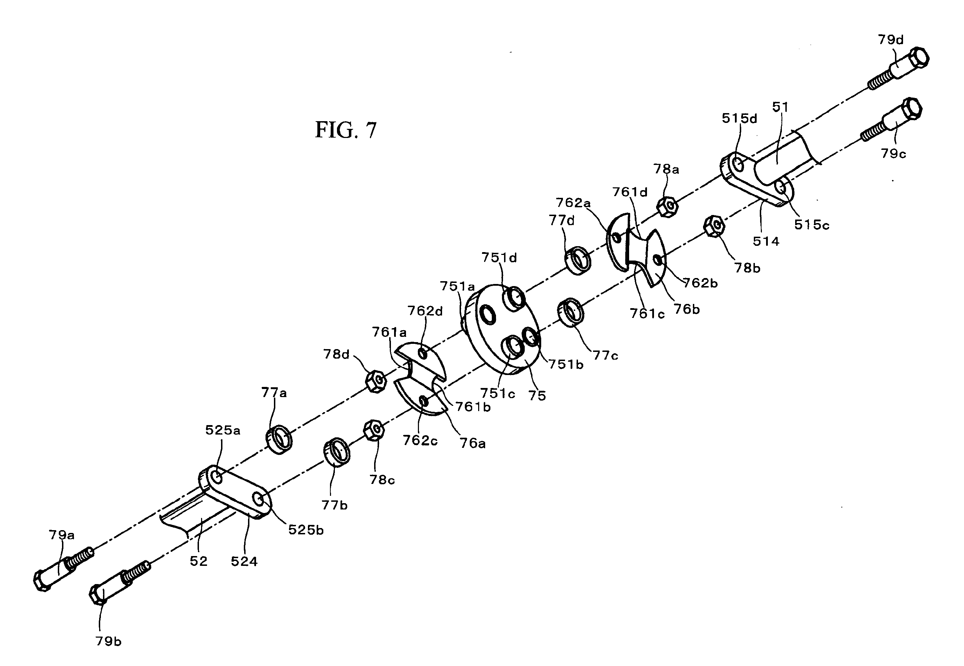

Next, a second embodiment of the present invention will be described. Fig. 6, which is equivalent to Fig. 2 for the first embodiment, is a partly sectional side elevation view showing principal parts of a steering apparatus according to the second embodiment of the present invention. Fig. 7 is an exploded perspective view of an elastic coupling shown in Fig. 6. In the following, only parts of the steering apparatus of the present embodiment configured differently from those used in the first embodiment will be described. Description which duplicates the foregoing description will be omitted. Parts identical with those used in the first embodiment will be denoted by the same reference numerals as used in describing the first embodiment. The elastic coupling used in the first embodiment is of a stopper pin type. The elastic coupling used in the second embodiment is of a coupling type.

As shown in Figs. 6 and 7, in the steering apparatus according to the second embodiment, a cylindrical column 1 is fixed to a vehicle body, and a steering shaft 12 is rotatably and axially supported by the column 1. A steering wheel 13 as shown in the first embodiment is connected to a right end (toward a rear of the vehicle) of the steering shaft 12. An intermediate shaft 3 is connected to a left end (toward a front of the vehicle) of the steering shaft 12 via a Cardan joint 2.

A double Cardan constant velocity universal joint 4 which is identical in configuration with the one used in the first embodiment is connected to a left end of the intermediate shaft 3. An extension shaft 5 is connected to the double Cardan constant velocity universal joint 4. A pinion 54 attached to a pinion shaft 53 connected to a lower end of the extension shaft 5 is engaged with a rack 61 of a steering gear 6.

The extension shaft 5 includes an upper extension shaft 51, a lower extension shaft 52, and an elastic coupling 7 of a coupling type, a lower end of the upper extension shaft 51 and an upper end of the lower extension shaft 52 being connected by the elastic coupling 7. The elastic coupling 7 of a coupling type is provided at a position closer, than an axial midpoint of the extension shaft 5, to an upper end thereof. The pinion shaft 53 and the pinion 54 are not integral with the extension shaft 5. They are fixedly clamped to a coupling 523 formed at a lower end of the lower extension shaft 52.

As shown in Figs. 6 and 7, the elastic coupling 7 of a coupling type used in the second embodiment includes a vibration-proof disc-shaped rubber 75 made of an elastomeric material such as rubber. Four bolt through-holes are formed through, along a left-to-right direction as viewed in Fig. 7, the vibration-proof rubber 75 to be 90 degrees apart. Metallic cylindrical members 751a to 751dare fit in the bolt through-holes, respectively.

A pair of the cylindrical members 751a and 751b opposed to each other are fit such that they protrude from a left face of the vibration-proof rubber 75. A pair of the cylindrical members 751c and 751d opposed to each other is fit such that they protrude from a right face of the vibration-proof rubber 75. Plastic collars 77a to 77d are fit onto outer peripheries of protruding portions of the cylindrical members 751a to 751d, respectively, the plastic collars 77a to 77d being about as high as the protruding portions.

The lower extension shaft 52 and the upper extension shaft 51 are connected to each other using the elastic coupling 7. At this time, a metallic stopper plate 76a having notched portions 761a and 761b corresponding to the plastic collars 77a and 77b is fit between the lower extension shaft 52 and the vibration-proof rubber 75, and a metallic stopper plate 76b having notched portions 761c and 761d corresponding to the plastic collars 77c and 77d is fit between the upper extension shaft 51 and the vibration-proof rubber 75.

A pair of bolt holes 762c and 762d are formed on both sides of a pair of the notched portions 761a and 761b of the stopper plate 76a, the bolt holes 762c and 762d corresponding to a pair of the cylindrical members 751c and 751d. A pair of bolt holes 762a and 762b are formed on both sides of a pair of the notched portions 761c and 761d of the stopper plate 76b, the bolt holes 762a and 762b corresponding to a pair of the cylindrical members 751a and 751b.

The stopper plates 76a and 76b are to prevent the vibration-proof rubber 75 from being twisted when the extension shaft 5 rotates. The notched portions 761a to 761d abut against the plastic collars 77a to 77d, respectively, to restrict turning of the vibration-proof rubber 75.

At the upper end (right end as viewed in Fig. 7) of the lower extension shaft 52, a flange 524 to be fixed to the vibration-proof rubber 75 is formed integrally with the lower extension shaft 52. A pair of bolt through-holes 525a and 525b is formed in two end portions of the flange 524, respectively. At the lower end (left end as viewed in Fig. 7) of the upper extension shaft 51, a flange 514 to be fixed to the vibration-proof rubber 75 is formed integrally with the upper extension shaft 51. A pair of bolt through-holes 515c and 515d is formed in two end portions of the flange 514, respectively.

To fix the lower extension shaft 52 and the upper extension shaft 51 to the vibration-proof rubber 75 using bolts, first the flange 524 of the lower extension shaft 52 is positioned on the cylindrical members 751a and 751b protruding from the left face of the vibration-proof rubber 75, then bolts 79a and 79b are inserted, respectively, through the bolt through-holes 525a and 525b formed in the flange 524. The bolts 79a and 79b are then further inserted through the cylindrical members 751a and 751b fit in the vibration-proof rubber 75 and the bolt holes 762a and 762b formed in the stopper plate 76b disposed on the right face of the vibration-proof rubber 75. Subsequently, nuts 78a and 78b are fixedly screwed to threaded end portions of the bolts 79a and 79b, respectively.

Next, the bolt through-holes 515c and 515d formed in the flange 514 of the upper extension shaft 51 are aligned with the cylindrical members 751c and 751d protruding from the right face of the vibration-proof rubber 75, then bolts 79c and 79d are inserted, respectively, through the boltthrough-holes515c and 515d formed in the flange 524. The bolts 79c and 79d are then further inserted through the cylindrical members 751c and 751d fit in the vibration-proof rubber 75 and the bolt holes 762c and 762d formed in the stopper plate 76a disposed on the left face of the vibration-proof rubber 75. Subsequently, nuts 78c and 78d are fixedly screwed to threaded end portions of the bolts 79c and 79d, respectively.

In cases where the elastic coupling 7 of a coupling type, configured as described above, of the second embodiment is used, wheel and vehicle body vibrations generated when the vehicle travels cause the heavy double Cardan constant velocity universal joint 4 to vibrate, but the vibrations of the double Cardan constant velocity universal joint 4 are absorbed by twisting movement of the vibration-proof rubber 75. Thus, the vibrations and bending moments applied to the pinion shaft 53 and the pinion 54 are reduced. As a result, steering stability is improved and the pinion shaft 53 is prevented from being subjected to a heavy load.

When the torque applied from the steering wheel 13 to the steering shaft 12 is large as in the case of giving a large steering angle to front wheels, the notched portions 761a to 761d formed in the stopper plates 76a and 76b abut against the plastic collars 77a to 77d, respectively.

As a result, a large portion of the torque applied from the steering wheel 13 to the steering shaft 12 is transmitted to the lower extension shaft 52 via the stopper plates 76a and 76b and the plastic collars 77a to 77d. In such a state, the torque transmitted via the vibration-proof rubber 75 is limited, so that the vibration-proof rubber 75 is not subjected to an excessive force.

### Third Embodiment

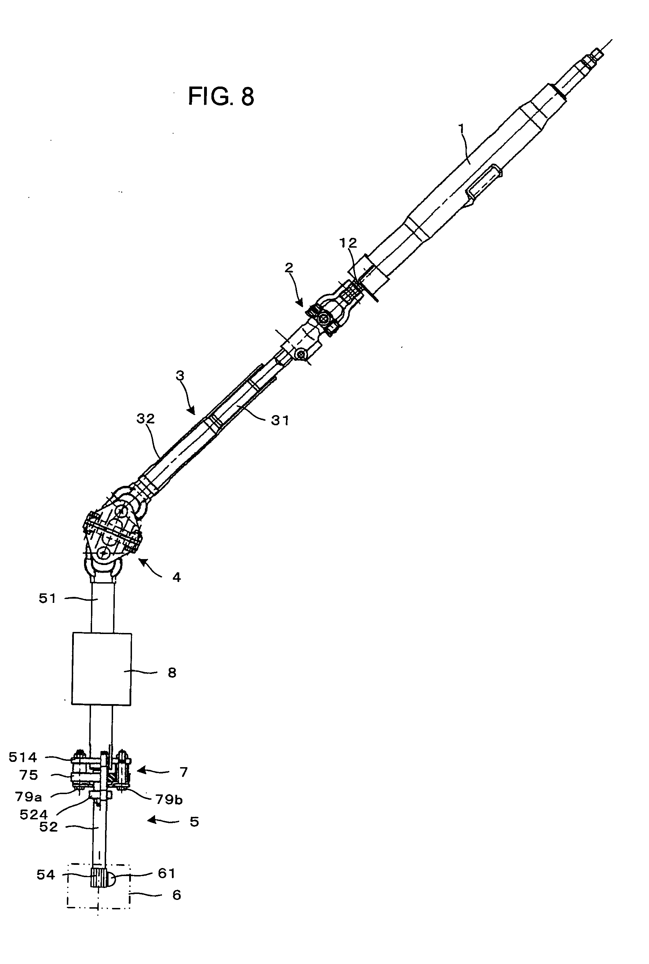

Next, a third embodiment of the present invention will be described. Fig. 8, which is equivalent to Fig. 2 for the first embodiment, is a partly sectional side elevation view of a steering apparatus according to the third embodiment of the present invention. In the following, only parts of the steering apparatus of the present embodiment configured differently from those used in the foregoing embodiments will be described. Description which duplicates the foregoing description will be omitted. Parts identical with those used in the foregoing embodiments will be denoted by the same reference numerals as used in describing the foregoing embodiments.

The third embodiment represents a case in which a variable gear ratio steering (VGRS) device is provided between a double Cardan constant velocity universal joint 4 and an extension shaft 5, thevariablegearratiosteering (VGRS) device being for changing a ratio between a steering angle of a steering wheel and a turning angle of front wheels, that is, a steering angle ratio depending on the running speed of a vehicle.

As shown in Fig. 8, in the steering apparatus according to the third embodiment, a cylindrical column 1 is fixed to a vehicle body, and a steering shaft 12 is rotatably and axially supported by the column 1. A steering wheel 13 as shown in the first embodiment is connected to a right end (toward a rear of the vehicle) of the steering shaft 12. An intermediate shaft 3 is connected to a left end (toward a front of the vehicle) of the steering shaft 12 via a Cardan joint 2.

A double Cardan constant velocity universal joint 4 which is identical in configuration with the one used in the first embodiment is connected to a left end of the intermediate shaft 3. An extension shaft 5 is connected to the double Cardan constant velocity universal joint 4. A pinion 54 formed at a lower end of the extension shaft 5 integrally therewith is engaged with a rack 61 of a steering gear 6.

The extension shaft 5 includes an upper extension shaft 51, a lower extension shaft 52, and an elastic coupling 7 which is identical in configuration with the elastic coupling 7 used in the second embodiment, a lower end of the upper extension shaft 51 and an upper end of the lower extension shaft 52 being connected by the elastic coupling 7. The elastic coupling 7 of a coupling type is provided at a position closer, than an axial midpoint of the extension shaft 5, to a lower end thereof.

A variable gear ratio steering (VGRS) device 8 is mounted at about an axial midpoint of the upper extension shaft 51. The variable gear ratio steering (VGRS) device 8 internally includes a differential transmission mechanism such as a harmonic drive gearing mechanism for speed reduction, for example, like the one disclosed in JP-A No. 211541/2000 or a planetary gear mechanism. It is a device to continuously change a steering angle ratio according to the running speed of a vehicle, decreasing the turning angle of the steering wheel when the vehicle is running at low speed and increasing the turning angle of the steering wheel when the vehicle is running at high speed.

When the steering apparatus, configured as described above, of the third embodiment is used, wheel and vehicle body vibrations generated when the vehicle travels cause the heavy double Cardan constant velocity universal joint 4 and the variable gear ratio steering (VGRS) device 8 to vibrate, but the vibrations of the double Cardan constant velocity universal joint 4 and the variable gear ratio steering (VGRS) device 8 are absorbed by twisting movement of the vibration-proof rubber 75. Thus, the vibrations and bending moments applied to the pinion 54 are reduced. As a result, steering stability is improved and the pinion 54 is prevented from being subjected to a heavy load.

### Fourth Embodiment

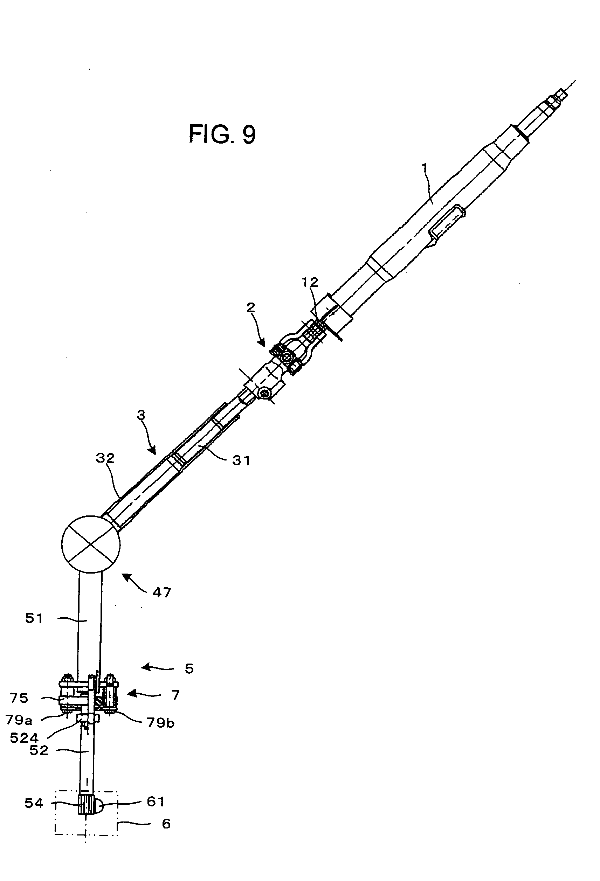

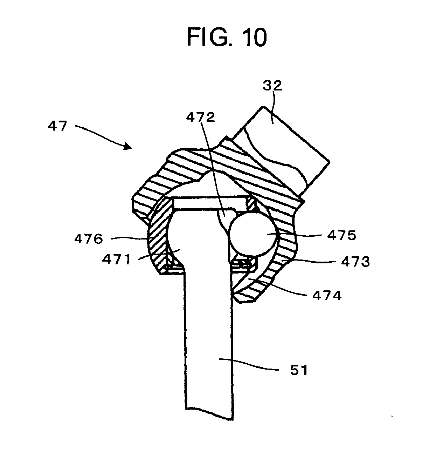

Next, a fourth embodiment of the present invention will be described. Fig. 9, which is equivalent to Fig. 2 for the first embodiment, is a partly sectional side elevation view of a steering apparatus according to the fourth embodiment of the present invention. Fig. 10 is a cross-sectional view of a constant velocity universal joint shown in Fig. 9. In the following, only parts of the steering apparatus of the present embodiment configured differently from those used in the foregoing embodiments will be described. Description which duplicates the foregoing description will be omitted. Parts identical with those used in the foregoing embodiments will be denoted by the same reference numerals as used in describing the foregoing embodiments. In the fourth embodiment, a Rzeppa constant velocity universal joint is used instead of the double Cardan constant velocityuniversal joint 4 used in the foregoing embodiments.

As shown in Fig. 9, in the steering apparatus according to the fourth embodiment, a cylindrical column 1 is fixed to a vehicle body, and a steering shaft 12 is rotatably and axially supported by the column 1. A steering wheel 13 as shown in the first embodiment is connected to a right end (toward a rear of the vehicle) of the steering shaft 12. An intermediate shaft 3 is connected to a left end (toward a front of the vehicle) of the steering shaft 12 via a Cardan joint 2.

A Rzeppa constant velocity universal joint 47 is connected to a left end of the intermediate shaft 3. An extension shaft 5 is connected to the Rzeppa constant velocity universal joint 47. A pinion 54 formed at a lower end of the extension shaft 5 integrally therewith is engaged with a rack 61 of a steering gear 6.

The extension shaft 5 includes an upper extension shaft 51, a lower extension shaft 52, and an elastic coupling 7 which is identical in configuration with the elastic coupling 7 used in the second embodiment, a lower end of the upper extension shaft 51 and an upper end of the lower extension shaft 52 being connected by the elastic coupling 7. The elastic coupling 7 of a coupling type is provided at about an axial midpoint of the extension shaft 5. In the fourth embodiment, an Oldham's coupling may be disposed on the intermediate shaft 3 or on the extension shaft 5 instead of using a Cardan joint 2.

Fig. 10 is a detailed sectional view of the Rzeppa constant velocity universal joint 47. A spherical inner coupling member 471 is formed at an upper end of the upper extension shaft 51 integrally therewith. A ball guide groove 472 is formed on the spherical surface of the inner coupling member 471. An outer coupling member 473 having a spherical concave portion is formed at a lower end of an intermediate outer shaft 32 integrally therewith, the intermediate outer shaft 32 being included in the intermediate shaft 3. A ball guide groove 474 is formed in the concave portion.

Plural torque transmitting balls 475 are rollably fit in the ball guide grooves 472 and 474, enabling torque transmission between the inner coupling member 471 and the outer coupling member 473. A ball retainer 476 having an inner surface complementary to the spherical surface of the inner coupling member 471 can rotate about a center of sphere of the inner coupling member 471 while retaining the torque transmitting balls 475.

Even though, in the above embodiment, the steering shaft 12 and the intermediate inner shaft 31 are connected by the Cardan joint 2, the Cardan joint 2 may be omitted in cases where the steering shaft 12 and the intermediate inner shaft 31 can be arranged straightway with no assembly error. Even though the above embodiment has been described based on a case where a steering apparatus not allowing a position of the steering wheel 13 to be adjusted depending on a physical size of a driver is used, the embodiment may also be applied to a steering apparatus which allows at least either one of a tilted position or a telescopic position of the steering wheel 13 to be adjusted.

## Claims

1. A steering apparatus, comprising:
asteering column for rotatably supporting a steering shaft with which a steering wheel is to be fitted at the rear end;
an intermediate shaft connected directly or indirectly to the front end of said steering shaft;
a constant velocity universal joint connected to said intermediate shaft;
an extension shaft consisting of an upper part connected to said constant velocity universal joint and a lower part having a pinion engaging with a steering rack; and,
an elastic coupling connecting said upper part to said lower part.

2. A steering apparatus according to claim 1, wherein said elastic coupling is provided at the substantial midpoint of said extension shaft.

3. A steering apparatus according to claim 1, wherein:
said elastic coupling includes an elastic body for transmitting torque applied to upper part to said lower part when said torque is smaller than a predetermined value and a stopper pin for transmitting said torque when said torque is larger than said value.

4. A steering apparatus according to claim 1, wherein said intermediate shaft comprises an outer shaft and an inner shaft engaging with said outer shaft for transmitting torque but being allowed to slide axially in said outer shaft.

5. A steering apparatus according to claim 1, wherein said constant velocity universal joint is a double Cardan joint or a Rzeppa joint.

6. A steering apparatus according to claims 1 to 5, further comprising a variable gear ratio steering device for changing the transmission ratio provided between said upper and lower parts.
